(19) Europäisches Patentamt
European Patent Office
Office européen des brevets

(11) **EP 3 128 245 B1**

(12) **EUROPEAN PATENT SPECIFICATION**

(45) Date of publication and mention
of the grant of the patent:
**09.11.2022 Bulletin 2022/45**

(21) Application number: **14887131.2**

(22) Date of filing: **09.12.2014**

(51) International Patent Classification (IPC):
**F24F 6/04** *(2006.01)*        **F24F 6/00** *(2006.01)*

(52) Cooperative Patent Classification (CPC):
**F24F 6/04;** F24F 2006/046

(86) International application number:
**PCT/JP2014/082553**

(87) International publication number:
**WO 2015/145888 (01.10.2015 Gazette 2015/39)**

(54) **HUMIDIFICATION ELEMENT AND HUMIDIFIER**

BEFEUCHTUNGSELEMENT UND BEFEUCHTER

ÉLÉMENT D'HUMIDIFICATION ET HUMIDIFICATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2014 JP 2014063939**

(43) Date of publication of application:
**08.02.2017 Bulletin 2017/06**

(73) Proprietor: **Mitsubishi Electric Corporation
Chiyoda-ku
Tokyo 100-8310 (JP)**

(72) Inventors:
• **HIRAI, Hidekazu
Tokyo 102-0073 (JP)**

• **TAKADA, Masaru
Tokyo 100-8310 (JP)**
• **FUJIOKA, Yoshihiro
Tokyo 102-0073 (JP)**

(74) Representative: **Pfenning, Meinig & Partner mbB
Patent- und Rechtsanwälte
Theresienhöhe 11a
80339 München (DE)**

(56) References cited:
**JP-A- H01 212 843     JP-A- H01 212 843
JP-A- H03 140 731     JP-A- H06 323 581
JP-U- H0 684 230      JP-U- H04 113 837
JP-U- H04 113 837**

**Description**

Field

The present invention relates to a humidifying element and a humidifying apparatus.

Background

As an apparatus that generates the air of a humidifying atmosphere, there are a natural evaporation type, an electric heating type, a water spray type, an ultrasound type, and the like. In the natural evaporation type apparatus, a humidifying ability tends to be small compared with the other types. In the electric heating type apparatus, running cost tends to be high compared with the other types. In the water spray type apparatus, humidifying efficiency tends to be low and the apparatus tends to be large compared with the other types. In the ultrasound type apparatus, initial cost tends to be high compared with the other types. In addition, the life of the apparatus tends to be short and germs in water and fine powder of calcium carbonate tend to scatter.
Under such circumstances, in a natural evaporation type humidifier, running cost is easily reduced compared with the other types. Therefore, the natural evaporation type humidifier is useful for use, in particular, in a place where the natural evaporation type humidifier is operated for a long time. The humidifying ability described as the problem above is being improved.
There are various forms of the natural evaporation type humidifier (see, for example, Patent Literature 1). Among the forms, there are a "dripping type" or a "flow-down type" as a humidifying system suitable for use for a long time. The humidifiers of these types tend to be used in humidifying apparatuses for business use such as an air conditioner (see, for example,
[0005]    Patent Literatures 2 to 5). Patent Literature 6 discloses a humidifier for an air conditioner with humidifying plates.
Patent Literature 6 thereby discloses a humidifier according to the preamble of claim 1.

Citation List

Patent Literature

Patent Literature 1: Japanese Patent Publication No. H07-65788
Patent Literature 2: Japanese Utility Model Publication No. H4-113837
Patent Literature 3: Japanese Patent Application Laid-Open No. 2003-42488
Patent Literature 4: Japanese Utility Model Publication No. H6-84230
Patent Literature 5: Japanese Patent Application Laid-Open No. 2004-61058
Patent Literature 6: JP H01 212843 A

Summary

Technical Problem

In general, in a humidifying apparatus including a humidifying element of the dripping type or the flow-down type, for example, to evenly supply water to the entire humidifying element and increase a humidifying amount, to wash away hard components on humidifying body surfaces condensed by humidifying operation, and to clean odor materials absorbed by the humidifying bodies, the water of the humidifying amount or more needs to be supplied to the humidifying bodies. On the other hand, when a supply water flow rate is increased more than necessary, the water is supplied exceeding a flow rate penetrable through the humidifying bodies. Therefore, the water running on the surface of the humidifying bodies is blown up by blowing air and a scattering occurrence risk increases. Running cost such as a water bill also increase because water consumption of the product increases. To provide a humidifier excellent in long-term reliability concerning humidifying life, odor, and the like and having a low scattering risk, it is necessary to uniformly transmit a necessary minimum water supply flow rate from a water supply port of the humidifier to humidifying bodies.
As means for uniformly supplying the supply water to the humidifying bodies, there is a method of setting, above the humidifying bodies, a diffusion plate formed by a porous body having high water retention and water absorption and transferring water diffused in the diffusion plate to the humidifying bodies to achieve uniformity of the water supply to the entire humidifying bodies. For example, there have been adopted, for example, a method of forming cutout grooves in the humidifying bodies and the diffusion plate and joining the humidifying bodies and the diffusion plate by meshing (see Patent Literature 2 described above), a method of bumping the humidifying bodies and a water absorption support member provided above the humidifying bodies each other (see Patent Literature 3 described above), a method of bumping the humidifying bodies themselves against the diffusion plate to perform water supply (see Patent Literature 4 described above), and a method of winding unwoven fabric on a water supply pipe and performing dripping from small holes of the diffusion plate (see Patent Literature 5 described above).

However, as common problems of these methods, there are, for example, fluctuation in thickness and dimensions of the humidifying plate and the diffusion plate, contact fluctuation due to vibration during conveyance and the like, assembly deterioration due to the meshing of the cutouts of a plurality of humidifying bodies and the diffusion plate, an increase in material expenses due to member addition for contact support for the diffusion plate and the humidifying bodies, and an increase in a space for the joining.

The present invention has been devised in view of the above and an object of the present invention is to obtain a humidifying element in which it is possible to absorb fluctuation in dimensions of a humidifying plate and a diffusion plate and more surely bring the humidifying plate and the diffusion plate into contact with each other while achieving easiness of assemblability through a simple configuration.

Solution to Problem

In order to solve the above problem, and in order to attain the above object, a humidifying element of the present invention is defined in claim 1. According to the invention, the humidifying element includes a plurality of humidifying bodies arranged along a first direction to provide gaps among the humidifying bodies, a diffusion plate that extends along the first direction and is in contact with the plurality of humidifying bodies, and a casing that houses the plurality of humidifying bodies and the diffusion plate on an inside. Further, according to the present invention, a water storing section that is provided above the humidifying bodies and stores water is formed in the casing, an opening is formed in a bottom surface of the water storing section, the diffusion plate is inserted into the opening, a first notch that extends up and down and into which the diffusion plate is inserted is formed with a width smaller than a thickness of the diffusion plate on an upper surface of the humidifying body, and at least one second notch that extends to at least one side of left and right direction sides viewed along the first direction is formed from a distal end of the first notch in the humidifying body.

Preferred embodiments of the invention are defined in the dependent claims.

Advantageous Effects of Invention

According to the present invention, there is an effect that it is possible to obtain a humidifying element in which it is possible to absorb fluctuation in dimensions of a humidifying plate and a diffusion plate and more surely bring the humidifying plate and the diffusion plate into contact with each other while achieving easiness of assemblability through a simple configuration.

Brief Description of Drawings

FIG. 1 is a configuration diagram of a humidifying apparatus according to a first embodiment.
FIG. 2 is an enlarged view of a humidifying element portion of the humidifying apparatus.
FIG. 3 is a perspective view of the humidifying element.
FIG. 4 is an exploded perspective view of the humidifying element.
FIG. 5 is a front view of the humidifying element.
FIG. 6 is an arrow sectional view taken along line X-X shown in FIG. 5.
FIG. 7 is a sectional view of a peripheral portion of a water storing section.
FIG. 8 is a sectional view of a peripheral portion of a water storing section shown as a comparative example.
FIG. 9 is a sectional view showing an example of the peripheral portion of the water storing section.
FIG. 10 is a sectional view showing an example of the peripheral portion of the water storing section.
FIG. 11 is a sectional view showing an example of the peripheral portion of the water storing section.
FIG. 12 is a sectional view showing an example of the peripheral portion of the water storing section.
FIG. 13 is a sectional view showing an example of the peripheral portion of the water storing section.
FIG. 14 is a sectional view showing an example of the peripheral portion of the water storing section.
FIG. 15 is a diagram of a humidifying body viewed along a first direction.
FIG. 16 is a diagram of the humidifying body shown as an example and viewed along the first direction.
FIG. 17 is an enlarged perspective view of a cutout portion.

FIG. 18 is an enlarged exploded perspective view of the cutout portion.
FIG. 19 is a diagram showing an example of crack-like second notches.
FIG. 20 is a diagram showing an example of a notch formed in the humidifying body.

Description of Embodiments

A humidifying element and a humidifying apparatus according to an embodiment of the present invention are explained in detail below with reference to the drawings. Note that the present invention is not limited by the embodiment. The invention is limited by the subject-matter defined in the appended claims.

First Embodiment.

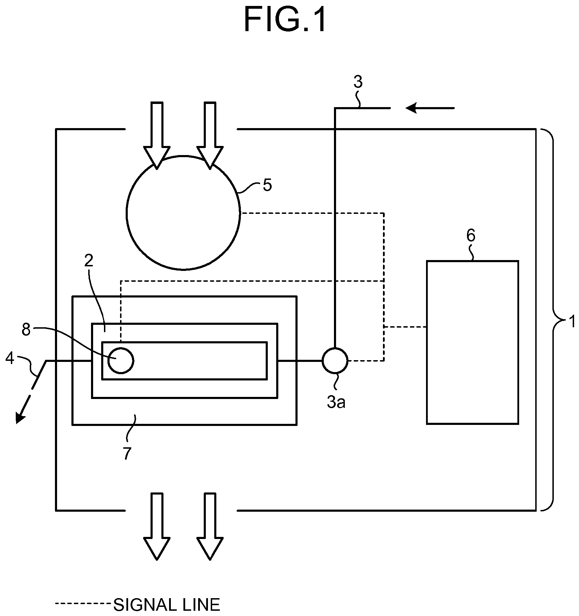

FIG. 1 is a configuration diagram of a humidifying apparatus 1 according to a first embodiment. A humidifying element 2 is incorporated in the humidifying apparatus 1.

A blower 5 for feeding the air in a room into the humidifying element 2 and blowing out the air into the room is incorporated on a ventilation upstream side or a ventilation downstream side of the humidifying element 2.

The humidifying apparatus 1 includes the humidifying element 2, a water supply pipe 3 connected to a water supply source such as waterworks to feed water for humidification to the humidifying element 2, a water discharge pipe 4 for discharging the water remaining not used for the humidification by the humidifying element 2 to the outside, the blower 5 that allows an air flow to pass through the humidifying element 2, a control device 6 that performs, for example, control of the blower 5 and an electromagnetic valve of a water supply system (a water supply valve 3a), and a drain pan 7 that receives waste water and discharges the waste water to the outside.

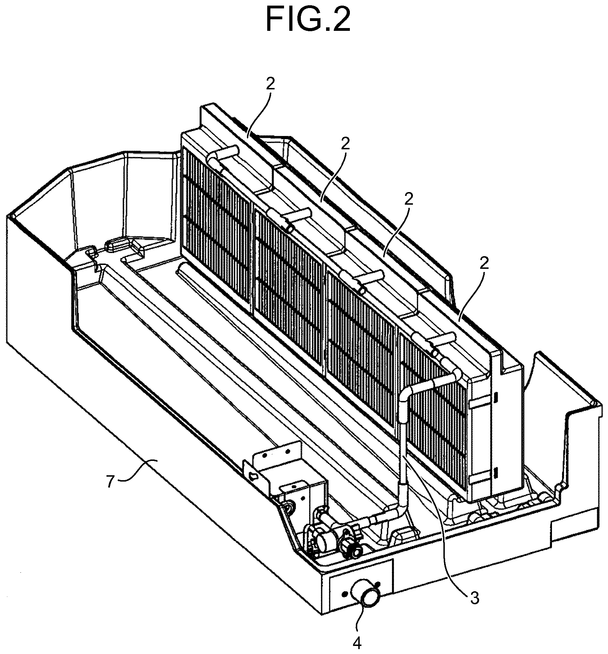

FIG. 2 is an enlarged view of the portion of the humidifying element 2 of the humidifying apparatus 1. One or a plurality of humidifying elements 2 are directly set on the drain pan 7. Corner portions on both sides of top structures of the humidifying elements 2 are insertably and removably held by, for example, guide rails (not shown in the figure) suspended on partition walls and a front side inner wall surface of a main body box body. A water supply system including the water supply valve 3a that supplies water for humidification and interrupts the supply is connected to the humidifying elements 2. The water discharge pipe 4 is connected to the drain pan 7.

The water supply system that feeds the water for humidification to the humidifying elements 2 is configured as a water channel including, besides the water supply valve 3a that adjusts the pressure and the flow rate of the water supplied to the humidifying element 2, a strainer that prevents intrusion of dust into the water supply system and the water supply pipe 3 for water feeding. All of connecting portions of the water supply system excluding a connecting portion to the water supply source side are desirably integrated in the drain pan 7.

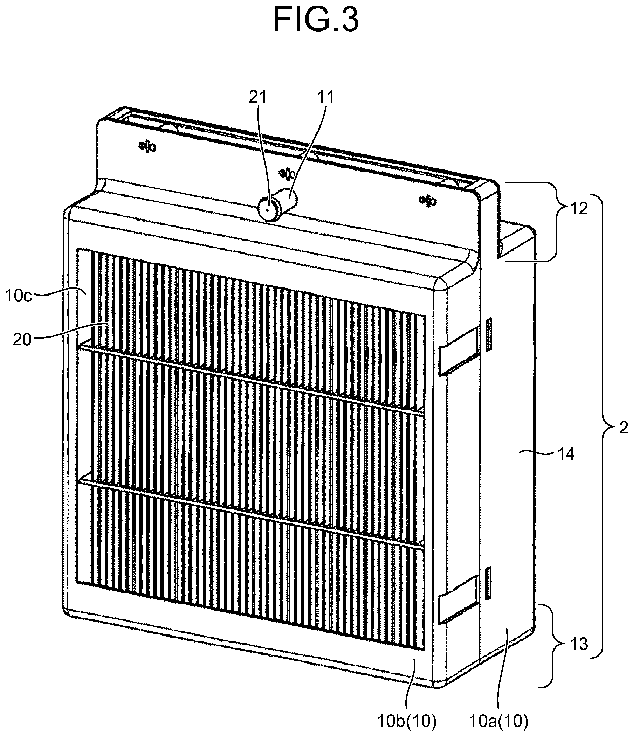

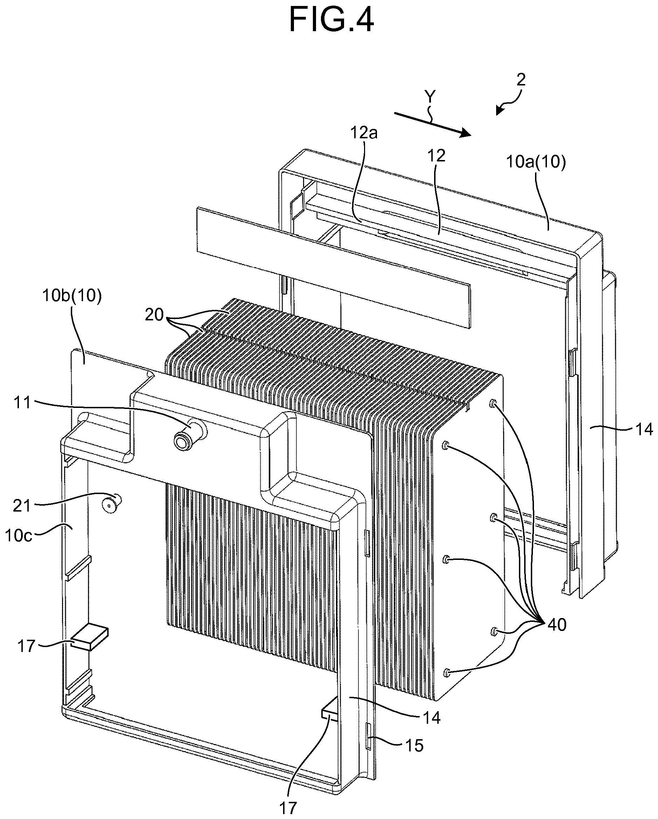

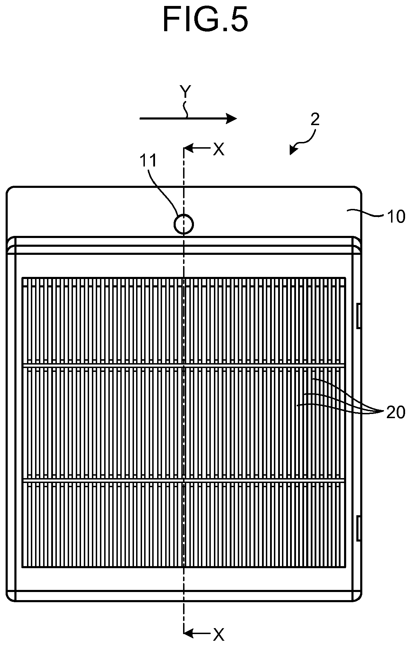

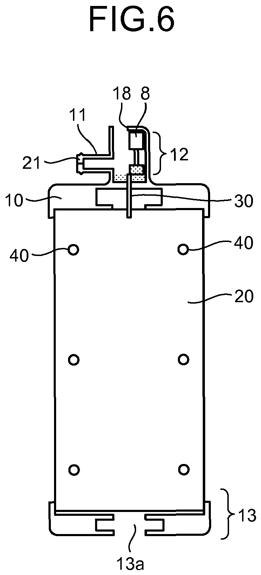

FIG. 3 is a perspective view of the humidifying element 2. FIG. 4 is an exploded perspective view of the humidifying element 2. FIG. 5 is a front view of the humidifying element 2. FIG. 6 is an arrow sectional view taken along line X-X shown in FIG. 5. The humidifying element 2 includes a large number of flat humidifying bodies 20 arranged along a first direction (a direction indicated by an arrow Y in FIG. 5) to provide gaps among the humidifying bodies 20. A diffusion plate 30 as a diffusing member is set in contact with upper parts of the humidifying bodies 20. The diffusion plate 30 is formed to extend along the first direction. A plurality of humidifying bodies 20 are collectively in contact with one diffusion plate 30.

A water storing section 12 that stores water to be supplied to the humidifying bodies 20 and a water supply port 11 for injecting water supplied from the water supply pipe 3 into the water storing section 12 are present above the humidifying bodies 20. A water discharge section 13 and a water discharge port 13a for receiving water remaining without being used for humidification from the humidifying bodies 20 and discharging the water are present below the humidifying bodies 20.

The humidifying bodies 20 are housed and fixed on the inside of the casing 10. The water supply port 11, the water storing section 12, and the water discharge section 13 are formed in the casing 10. In the casing 10, a structure wall 14 that connects the water storing section 12 serving as an upper structure and the water discharge section 13 serving as a lower structure is formed. Water accumulates in the water storing section 12 from the water supply port 11, penetrates into the diffusion plate 30 and spreads to the humidifying bodies 20, and humidifies the air flowing in the gaps among the humidifying bodies 20. Excess water not evaporated in the humidifying bodies 20 flows out to the outside of the casing 10 from the water discharge section 13 in a lower part.

The casing 10 is formed by, for example, injection molding by thermoplastic such as ABS resin, PS resin, or PP resin. The casing 10 is divided into two components, that is, a casing 10a and a casing 10b. The casing 10a and the casing 10b are integrated by sandwiching the humidifying bodies 20 with the casing 10a and the casing 10b and joining engaging sections 15 of the casing 10a and the casing 10.

In the casing 10a and the casing 10b, portions formed as the water storing section 12, portions formed as the water discharge port 13a, and opening sections 10c for introducing humidified air into the humidifying bodies 20 are respectively provided. The water supply port 11 for supplying water to the water storing section 12 is provided in the casing 10b. On the inner side of the casing 10, a housing space for housing the humidifying bodies 20 is provided.

Positioning protrusions 17 for regulating the positions of the humidifying bodies 20 are provided in portions of the casing 10 in contact with the humidifying bodies 20. As the humidifying bodies 20, there are some humidifying bodies that soften when containing water and are deformed by the weight of water. Therefore, by regulating the positions of the humidifying bodies 20 in the outer peripheral portions of the humidifying bodies 20 in contact with the casing 10, it is possible to secure dimensions of channels among the humidifying bodies 20 and allow the air to uniformly flow.

Consequently, a pressure loss of the humidifying element 2 is reduced. The entire surfaces of the humidifying bodies 20 are effectively used as humidifying surfaces. Therefore, an effect that a humidifying amount increases compared with when the humidifying bodies 20 are distorted can be expected. Note that the water storing section 12 can be formed integrally with the diffusion plate 30 and housed in the casing 10.

The water supply pipe 3 is connected to the water supply port 11 to supply water to the water storing section 12. Therefore, the water supply port 11 is provided further on the upper surface side than the humidifying bodies 20 in an upper part of the humidifying element 2. The shape of the water supply port 11 is a shape matching the water supply pipe 3. For example, a convex band (a fold back) can be formed over the circumferential length of the water supply port 11 or the water supply port 11 can be bound by a hose band to prevent the water supply pipe 3 from easily come off.

When a water supply amount is too excessive with respect to a humidifying amount, an amount of water flowing from the water discharge section 13 without being used for humidification is large and a useless water amount increases. Therefore, it is desirable to provide a mechanism for reducing a water amount (e.g., an orifice 21 shown in FIGS. 3 and 6) and adjust a flow rate. In the flow rate adjustment, it is necessary to make it possible to supply a flow rate larger than a maximum humidifying amount of the humidifying element 2. The position and the like of the water supply port 11 are not limited as long as the water supply port 11 can supply water from upper parts of the humidifying bodies 20. However, when, for example, occurrence of a water leak or the like from a joint of the water supply pipe 3 and the water supply port 11 is taken into account, by disposing the water supply port 11 on an upstream side of the air to be humidified, water scattered to the upstream side by a flow of an air current is guided to a downstream side, that is, the humidifying element 2 side. It is possible to reduce a scattering distance of the water to the periphery.

The water storing section 12 is provided above the humidifying bodies 20. An opening 12a is formed on the bottom surface of the water storing section 12. The diffusion plate 30 is inserted into the opening 12a and projects further to the water storing section 12 side than the bottom surface. The plate surface of the tabular diffusion plate 30 and the bottom surface of the water storing section 12 are substantially perpendicular. The water storing section 12 is formed in a shape functioning as a water storage tank by integrating the casing 10a and the casing 10b. The diffusion plate 30 is sandwiched between the casing 10a and the casing 10b to be disposed on the bottom surface of the water storage tank. The water storing section 12 and the diffusion plate 30 can be formed as an integrated component. The integrated component can be sandwiched between the casing 10a and the casing 10b. A water level sensor 8 for detecting a water level of the water storing section 12 can be set in the water storing section 12. The detected water level can be fed back to control opening and closing of the water supply valve 3a with the control device 6.

The diffusion plate 30 is formed of a porous tabular material. To penetrate water and supply the water to the humidifying bodies 20, the surface of the material is desirably hydrophilic. Permeability is improved by the hydrophilicity and a water supply amount increases. Because the diffusion plate 30 comes into contact with water, the diffusion plate 30 is desirably formed of a material less easily deteriorated by the water, for example, a porous material made of resin including polyester such as PET resin or PP resin, cellulose, or metal including titanium, copper, or stainless steel. Hydrophilic treatment can be applied to the porous material to increase a hydrophilicity degree of the surface of the material.

Like the diffusion plate 30, the humidifying bodies 20 are formed of a porous tabular material. Suitable conditions for the humidifying bodies 20 are the same as the conditions for the diffusion plate 30. A material same as the material of the diffusion plate 30 can be used. However, if a material having higher water absorption than the diffusion plate 30 is used as the humidifying bodies 20, because the humidifying bodies 20 absorb water before the diffusion plate 30 absorbs the water and the water sufficiently diffuses, uniformity of supply of the water to the humidifying bodies 20 is sometimes deteriorated. In that case, it is possible to take measures by, for example, sufficiently increasing a dimension in the vertical direction of the diffusion plate 30. However, when a dimension in the height direction of the entire humidifying element 2 is limited, it is difficult to secure the height of the diffusion plate 30. Therefore, it is desirable to use a material having water absorption lower than the water absorption of the diffusion plate 30. In other words, it is possible to achieve a reduction in the size in the height direction of the humidifying element 2 by using, as the humidifying bodies 20, a material having water absorption lower than the water absorption of the diffusion plate 30.

Projecting sections 40 are provided on the surfaces of the humidifying bodies 20. Intervals among the humidifying bodies 20 are maintained by the projecting sections 40. The projecting sections 40 are formed by, for example pressing a jig or the like against the humidifying bodies 20 and plastically deforming pressed portions of the humidifying bodies 20. When two kinds of the humidifying bodies 20, on which arrayed positions of the projecting sections 40 are different, are alternately arrayed, the humidifying bodies 20 have a function of keeping the intervals of the humidifying bodies fixed. The intervals of the humidifying bodies only have to be kept. Combs having cutouts equivalent to the humidifying body thickness can be engaged with the humidifying bodies at fixed intervals to maintain the intervals or a structure for keeping intervals by stacking a plurality of wavy humidifying bodies in a honeycomb shape has no problem functionally.

The lower end of the diffusion plate 30 and the upper ends of the humidifying bodies 20 are set partially in contact with each other. If the diffusion plate 30 and the humidifying bodies 20 are in contact, water smoothly flows down with the action of surface tension. However, the lower end of the diffusion plate 30 and the upper end of the humidifying bodies 20 can be inserted into each other and coupled taking into account the influence of fluctuation during assembly and vibration during transportation. An example of the structure for setting the diffusion plate 30 and the humidifying bodies 20 in contact with each other is explained below.

A flow of water from the water supply port 11 to the humidifying bodies 20 is explained. The water supplied from the water supply port 11 flows into the water storing section 12. The water flowed into the water storing section 12 is absorbed by the diffusion plate 30 projecting from the bottom surface of the water storing section 12. The water flows down while spreading to the inside of the diffusion plate 30 and reaches the lower end of the diffusion plate 30.

Because the lower end of the diffusion plate 30 and the upper ends of the humidifying bodies 20 are in contact, the flowed-down water runs from sections of the contact to the humidifying bodies 20 and flows down with the action of the surface tension. The water flows down while spreading to the insides of the humidifying bodies 20 and being contained in the entire humidifying bodies 20 and drips from the lower ends of the humidifying bodies 20. At this point, moisture is taken from the surface of the humidifying bodies 20 by the air ventilated among the humidifying bodies 20. The air is discharged from the humidifying element 2 as humidified air. Therefore, a water amount dripped and discharged from the lower ends of the humidifying bodies 20 is a water amount obtained by subtracting a water amount taken from the humidifying bodies 20 as the humidified air from a water amount supplied from the water supply port 11.

In the series of flow of the water, a relation between the water level of the water stored in the water storing section 12 and the diffusion plate 30 is explained. The diffusion plate 30 is formed of the porous material. When the water is fed to the inside of the diffusion plate 30, flowing water resistance is present. Briefly, there is a relation of the following expression between a flow rate Q1 of the water passing inside the diffusion plate 30 and a water level h of the water stored in the water storing section 12.

$$Q1=ah+b \quad (1)$$

where, a and b represent constants related to flowing water resistance due to physical properties of the porous material and the dimensions of the diffusion plate 30.

For example, when hard components included in the supply water and vaporization residues such as silica and iron rust deposit on the inside of the diffusion plate 30, a and b decrease and the flow rate Q1 of the water flowing on the inside of the diffusion plate 30 decreases. Further, a water supply amount Q of the water supplied from the water supply port 11, time t from a start of the water supply, and a water level change h(t) have the following relation.

$$h(t)=(Q-b)/a \times (1-exp(-a/A \times t)) \quad (2)$$

where, A represent the bottom area of the water storing section 12.

In a state in which a sufficient time elapses after the water supply, t is replaced with ∞ in Expression (2) and the following expression is obtained:

$$h=(Q-b)/a \quad (3)$$

Further, when Expression (3) is substituted in Expression (1), the following relation is obtained:

$$Q1=ah+b=a \times (Q-b)/a+b=Q \quad (4)$$

That is, the water level h of the water stored in the water storing section 12 is determined such that the flow rate Q1 of the water passing through the diffusion plate 30 is equal to the water supply amount Q from the water supply port 11. Therefore, when hard components included in the supply water and vaporization residues such as silica and iron rust deposit on the inside of the diffusion plate 30 as time elapses, a and b decrease. Because the water level h of the water storing section 12 rises according to Expression (3), the flow rate Q1, that is, a humidifying amount is controlled to be fixed.

In this way, the humidifying element 2 that supplies the water from the water storing section 12 provided above the humidifying bodies 20 via the diffusion plate 30 has a function of controlling the humidifying amount fixed even when time elapses. However, an allowable upper limit value of a water level rise is present according to the dimensions of the water storing section 12 and the casing 10. From Expression (2), time until the water level reaches a state of a fixed water level increases when a decreases. Therefore, time is required from the start of the water supply until the humidifying amount stabilizes. Such a state is undesirable in the humidifying apparatus. Therefore, it is necessary to prevent the vaporization residues from depositing on the inside of the diffusion plate 30 as much as possible even when time elapses.

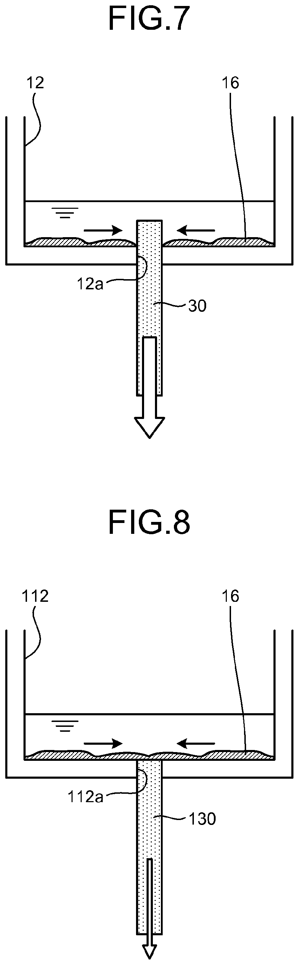

FIG. 7 is a sectional view of a peripheral portion of the water storing section 12. FIG. 8 is a sectional view of a peripheral portion of a water storing section 112 shown as a comparative example. In the comparative example shown in FIG. 8, a diffusion plate 130 inserted into an opening 112a does not project to the water storing section 112 side.

Hard components included in supplied water and vaporization residues 16 such as sludge of silica and iron rust deposit on the bottom surface of the water storing section 112 when time elapses. These deposits flow according to a water flow toward the diffusion plate 30 and deposit on the surface of the diffusion plate 30. When the diffusion plate 130 does not project from the bottom surface as in the comparative example, if the upper end face of the diffusion plate 130 is simply covered with the deposits, most of a portion exposed to the water storing section 112 is covered with the deposits. When the exposed portion of the diffusion plate 130 is covered with the deposits, a water amount of the water flowing inside the diffusion plate 130 greatly decreases and a water supply amount to humidifying bodies greatly decreases. As a result, a humidifying amount from a humidifying element decreases.

On the other hand, in the humidifying element 2 according to this embodiment, the diffusion plate 30 projects from the bottom surface of the water storing section 12. Therefore, even if deposits occurs by the same amount as the deposits shown in FIG. 8, as shown in FIG. 7, a part of a side surface is only covered and most of regions are exposed. Therefore, even when time elapses, it is easy to keep a satisfactory water feed state. It is possible to stably secure a humidifying amount.

Above the water storing section 12, a communication port 18 that causes the outside of the casing 10 and the water storing section 12 to communicate is formed. Therefore, the water storing section 12 is opened to the atmosphere. Further, because the communication port 18 is provided above the water supply port 11, the inside of the space of the water storing section 12 is always kept at the atmospheric pressure. The water pressure in the bottom surface portion of the water storing section 12 is the water-gage pressure of the water level. Therefore, it is possible to reduce the influence of fluctuation in supply pressure and secure a fixed humidifying amount.

A boundary portion between the opening 12a formed in the bottom surface of the water storing section 12 and the diffusion plate 30 is explained. When there is a gap between the opening 12a formed in the bottom surface of the water storing section 12 and the diffusion plate 30, a water leak easily occurs. Therefore, a sufficient water amount of the water is less easily supplied to the inside of the diffusion plate 30.

In particular, when the gap between the opening 12a and the diffusion plate 30 is non-uniform, the water flows down on the surface of the diffusion plate 30 with a non-uniform water amount and the water supply to the humidifying bodies 20 becomes non-uniform. Therefore, the humidifying amount easily becomes insufficient. Further, when the leaked water flows down on the surface of the diffusion plate 30, water drops scatter from the surface of the diffusion plate 30 with the force of the ventilation by the blower 5. The water drops are blown out to the indoor space. Hygiene is sometimes spoiled.

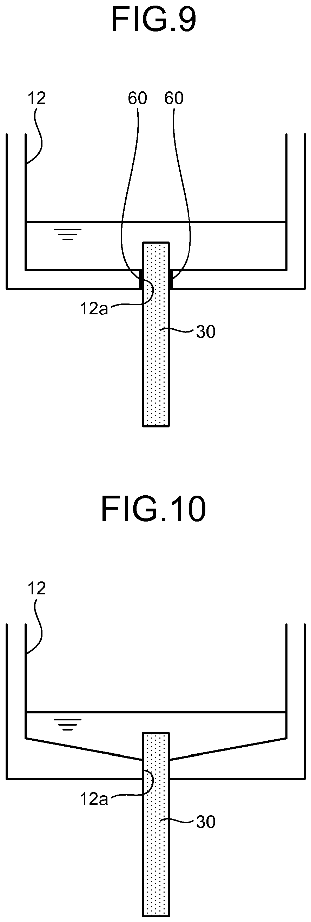

FIG. 9 is a sectional view showing an example of the peripheral portion of the water storing section 12. In this embodiment, a seal structure 60 is provided between the opening 12a and the diffusion plate 30 to reduce a water leak from the gap. The seal structure 60 is provided by, for example, integrally joining the water storing section 12 and the diffusion plate 30. The seal structure 60 is provided by, for example, so-called insert molding for inserting the diffusion plate 30 into a die for injection-molding the water storing section 12 and integrally molding the diffusion plate 30 and the water storing section 12. The seal structure 60 is provided by, for example, molding the water storing section 12 and thereafter thermally welding and integrating the water storing section 12 with the diffusion plate 30. The seal structure 60 is provided by, for example, setting dimensions of the opening 12a formed in the bottom surface of the water storing section 12 smaller than sectional dimensions of the diffusion plate 30 and pressing the diffusion plate 30 into the opening 12a.

As the seal structure 60, an adhesive for joining the opening 12a and the diffusion plate 30 can be provided. When the adhesive is used, it is desirable to use an adhesive not containing a component that volatilizes or elutes a volatile organic agent, silicon, or the like and hydrophobizes the diffusion plate 30 and the humidifying bodies 20. This because, when the diffusion plate 30 and the humidifying bodies 20 are hydrophobized, it is likely that water feed in the members is hindered and the humidifying amount decreases.

The seat structure 60 is, for example, a gasket fit in between the opening 12a of the water storing section 12 and the diffusion plate 30. When the gasket is fit in between the opening 12a and the diffusion plate 30, it is possible to prevent formation of the gap and reduce a water leak from the gap. Concerning components included in the gasket, like the adhesive, attention to a hydrophobic component is necessary.

As explained above, the seal structure 60 indicates a constituent member actually provided between the opening 12a and the diffusion plate 30 like the gasket and also includes a structure for sealing a space between the water storing section 12 (the casing 10) and the diffusion plate 30 without using another constituent member as in the case of the pressing of the diffusion plate 30 into to the opening 12a.

A stop of the humidifying operation at the time when humidification is unnecessary such as night is explained. For example, when nobody is in a room and humidification is unnecessary, for example, at night, the humidifying operation of the humidifying apparatus 1 is sometimes stopped. In this case, it is undesirable in terms of sanitation to leave the humidifying element 2 untouched for a long time in a wet state. When bacteria and mold in the air adhere to a wet portion and propagate, there is concern that the bacteria and mold spores are conveyed by ventilated air passing the surface of the humidifying element 2 and discharged into the room when the humidifying operation is resumed. As a method of suppressing the propagation of the bacteria and the mold, it is effective to dry the humidifying element 2 as soon as possible.

From such a view point, when the humidifying apparatus 1 is stopped, it is desirable to operate the blower 5 after closing the water supply valve 3a according to control from the control device 6 and perform control for drying the humidifying element 2. To reduce a drying time for the humidifying element 2, it is necessary to dry the water storing section 12 early. However, because the water storing section 12 has a water tank shape, it is difficult to ventilate and dry the water storing section 12. Therefore, after the water supply valve 3a is closed, it is important to cause the water in the water storing section 12 to quickly flow out toward the diffusion plate 30.

FIG. 10 is a sectional view showing an example of the peripheral portion of the water storing section 12. In FIG. 10, the bottom surface of the water storing section 12 inclines to be the bottom in the opening 12a portion. Therefore, after the water supply valve 3a is closed, the water in the water storing section 12 smoothly flows down toward the diffusion plate 30 inserted into the opening 12a. Therefore, the water in the water storing section 12 easily flows out to the outside passing through the diffusion plate 30. It is possible to achieve early drying of the inside of the water storing section 12.

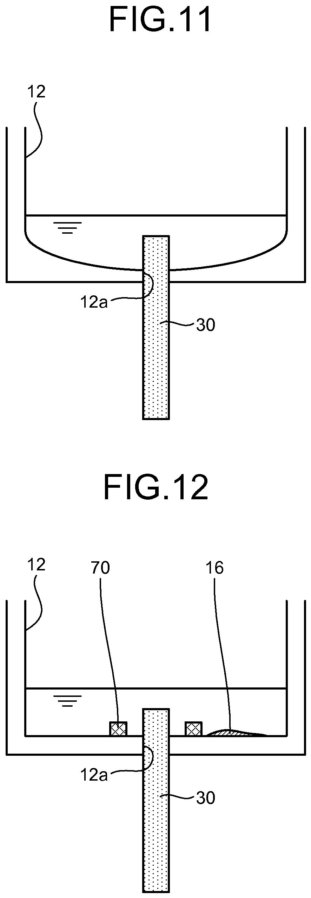

FIG. 11 is a sectional view showing an example of the peripheral portion of the water storing section 12. In FIG. 11, the bottom surface of the water storing section 12 is formed by a curved surface and inclined to be the bottom in the opening 12a portion. Note that the bottom surface of the water storing section 12 can be formed by a plane and a curved surface.

The material of the water storing section 12 can be a water repellent material such as PP or PTFE or, even if the water repellent material is not used, water repellent treatment can be applied to the surface of the water storing section 12 such that the water less easily stay in the water storing section 12. Further, from the viewpoint of hygiene, antibacterial treatment or mold prevention treatment can be applied to the water storing section 12, the diffusion plate 30, the humidifying bodies 20, and the casing 10.

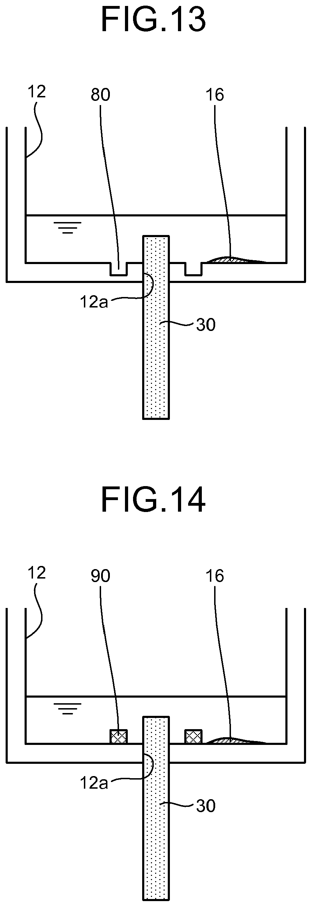

Another example for suppressing a decrease in a humidifying amount due to vaporization residues caused in the water storing section 12 is explained. FIG. 12 is a sectional view showing an example of the peripheral portion of the water storing section 12. FIG. 13 is a sectional view showing an example of the peripheral portion of the water storing section 12. In FIG. 12, a projecting section 70 is provided in the bottom of the water storing section 12 to surround the opening 12a. In FIG. 13, a recessed section 80 is provided in the bottom of the water storing section 12 to surround the opening 12a.

The vaporization residues 16 accumulate and deposit on the bottom surface of the water storing section 12 because the vaporization residues 16 have specific weight larger than the specific weight of water. When the water in the water storing section 12 flows toward the diffusion plate 30 (the opening 12a), the vaporization residues 16 deposited on the bottom surface also flow toward the diffusion plate 30. Because the projecting section 70 is provided in the bottom of the water storing section 12 to surround the opening 12a, the vaporization residues 16 are dammed by the projecting section 70 and suppressed from intruding into the diffusion plate 30.

Note that, to improve drainage of the bottom surface and achieve improvement of hygiene, it is desirable to fragment a part of the projecting section 70 to allow the water to flow from a fragmented portion. When the recessed section 80 is provided as shown in FIG. 13, the vaporization residues 16 having the specific weight larger than the specific weight of the water enter the recessed section 80. Therefore, intrusion into the diffusion plate 30 is suppressed and the drainage is secured. Note that a part of the recessed section 80 can be fragmented to provide a fragmented portion.

FIG. 14 is a sectional view showing an example of the peripheral portion of the water storing section 12. In FIG. 14, a capturing member 90 serving as a core of the vaporization residues 16 is provided on the bottom surface of the water storing section 12. In a state in which water is immersed in the water storing section 12, the vaporization residues 16 in the water grow using components of the capturing member 90 as cores and precipitate and fix on the surface of the capturing member 90. Therefore, it is possible to suppress intrusion of the vaporization residues 16 into the diffusion plate 30.

The capturing member 90 is formed of a material serving as a core of growth of calcium carbide, silica, iron, and the like included in supplied water. For example, a substance containing calcium carbide such as calcite or aragonite is suitable for the calcium carbide, a silica compound such as quartz is suitable for the silica, and a copper material is suitable for the iron.

As the capturing member 90, the respective components can be separately disposed in the water storing section 12 or can be changed to a powder state, mixed, and equalized and thereafter solidified by a binder or the like and used. Further, the material of the water storing section 12 can be a water repellent material such as PP or PTFE or, even if the water repellent material is not used, water repellent treatment can be applied to the surface of the water storing section 12 such that the water less easily stay in the water storing section 12. Further, from the viewpoint of hygiene, antibacterial treatment or mold prevention treatment is desirably applied to the water storing section 12, the diffusion plate 30, the humidifying bodies 20, and the casing 10.

Note that, as explained above, when the projecting section 70, the recessed section 80, or the capturing member 90 is provided on the bottom surface of the water storing section 12, the vaporization residues 16 less easily reach the diffusion plate 30. Therefore, even when the diffusion plate 30 is not projected to the water storing section 12 side, it is possible to expect an effect that a decrease in the humidifying amount is suppressed. The inclination of the bottom surface of the water storing section 12 explained above, the seal structure 60 for the opening 12a and the diffusion plate 30, and the configuration in which the projecting section 70, the recessed section 80, or the capturing member 90 is provided on the bottom surface of the water storing section 12 can be combined.

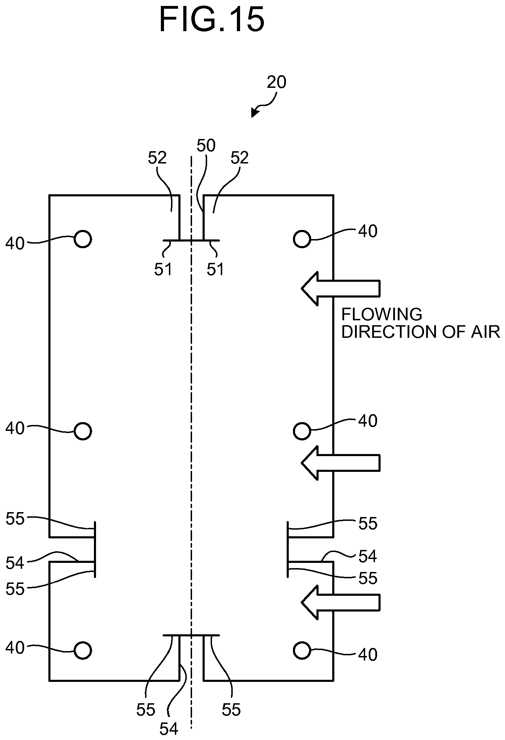

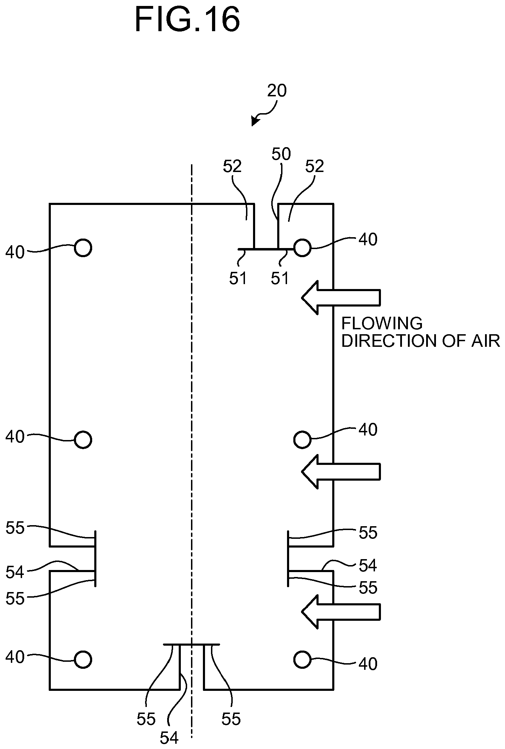

An example of a structure in which the diffusion plate 30 and the humidifying bodies 20 are set in contact with each other is explained. FIG. 15 is a view of the humidifying body 20 viewed along the first direction. FIG. 16 is a view of the humidifying body 20 shown as an example and viewed along the first direction. A cutout (a first notch) 50 for inserting the diffusion plate 30 is provided in the humidifying body 20. When the diffusion plate 30 is inserted into the cutout 50, the diffusion plate 30 and the humidifying body 20 come into contact with each other and the water runs from the diffusion plate 30 to the humidifying body 20.

The positions of the diffusion plate 30 and the humidifying body 20 can be determined by providing the cutout 50. The cutout 50 is provided in an upper side in the vertical direction (the upper surface) of the humidifying body 20. The width of the cutout 50 is smaller than the thickness of the diffusion plate 30.

In the example shown in FIG. 16, the cutout 50 is formed to be deviated to the right side. In this way, the cutout 50 deviated to the left or the right is disposed to be on the upstream side of the air flowing to the humidifying body 20. Therefore, the supply of the water to the humidifying body 20 is performed further from the upstream side in the flow of the air. The air passing among the humidifying bodies 20 is in contact with the humidifying bodies 20 for a longer time toward the downstream side and humidity tends to increase. That is, the air present further on the upstream side is drier and humidification from the humidifying bodies 20 is easily performed. Therefore, in the example shown in FIG. 16, it is possible to perform efficient humidification by performed the supply of the water to the humidifying body 20 further from the upstream side in the flow of the air.

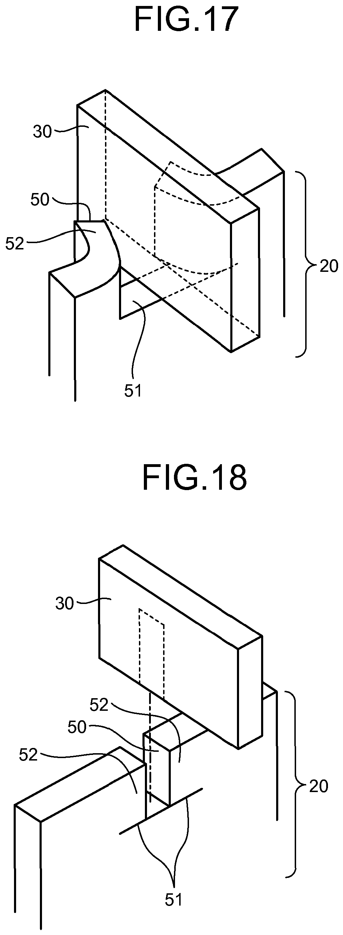

Two crack-like notches 51 extending to the left-right direction side are provided on the bottom surface (the distal end) of the cutout 50. Portions above the crack-like notches 51 are bendable bending sections 52. FIG. 17 is an enlarged perspective view of the cutout 50 portion. FIG. 18 is an enlarged exploded perspective view of the cutout 50 portion. As shown in FIG. 17, when the diffusion plate 30 is inserted into the cutout 50, the crack-like notches 51 open and the bending sections 52 bend. Consequently, the opening width of the cutout 50 increases to the thickness of the diffusion plate 30. At this point, the humidifying body 20 is pressed in the direction of the diffusion plate 30 by the reaction of the deformation of the bending sections 52. The humidifying body 20 and the diffusion plate 30 come into contact with each other.

As the humidifying body 20 and the diffusion plate 30, in general, a consolidated porous body of an open pore type having water permeability such as a fibrous porous body or a foaming porous body is often used. In the fibrous porous body, dimension fluctuation due to fluctuation in filling density of a base material and spring-back tends to be large. In the foaming porous body, dimension fluctuation tends to be large because of nonuniformity of filling density and structure of pores.

Therefore, the humidifying body 20 and the diffusion plate 30 come into contact with each other when the diffusion plate 30 is simply inserted without providing the crack-like notches 51 in the cutout 50 of the humidifying body 20. However, when the diffusion plate 30 is thicker than the width of the cutout 50, the diffusion plate 30 cannot be inserted into the cutout 50 and assemblability is deteriorated.

Conversely, when the diffusion plate 30 is thinner than the cutout 50, the humidifying body 20 and the diffusion plate 30 do not come into contact with each other and a gap is formed. When the gap is formed between the humidifying body 20 and the diffusion plate 30, the water is not sufficiently transferred from the diffusion plate 30 to the humidifying body 20. The water supply is transferred to only the humidifying bodies 20 in contact with the diffusion plate 30. Fluctuation occurs in a water supply flow rate in the entire humidifying element 2. When the water supply is not transferred to a part of the humidifying bodies 20, deterioration in humidifying efficiency by the humidifying element 2 is caused.

In this embodiment, the cracks 51 are formed and the width of the cutout 50 is set smaller than the thickness of the diffusion plate 30. Therefore, it is possible to absorb fluctuation in the thickness of the diffusion plate 30 and more surely set the humidifying body 20 and the diffusion plate 30 in contact with each other. Consequently, it is possible to more surely perform the transfer of the water supply to the humidifying body 20 and suppress the deterioration in the humidifying efficiency.

When the diffusion plate 30 is inserted in a state in which a plurality of humidifying bodies 20 are arranged in parallel when the diffusion plate 30 and the humidifying bodies 20 are assembled, positional deviation of the humidifying bodies 20 or the cutout 50 can be adjusted according to changes of respective opening states of the crack-like notches 51 on both sides of the humidifying bodies. Therefore, there is also an effect that it is possible to reduce a contact error of the diffusion plate 30 and the humidifying bodies 20 due to fluctuation in assembly.

To reduce a deformation amount of the bending sections 52 and impart elasticity to the bending sections 52, the crack-like notches 51 are desirably disposed one each on both the left and right sides of the cutout 50. Even if one crack-like notch 51 is disposed on one side, because the crack-like notch 51 on the one side opens and closes, an effect same as an effect obtained when two crack-like notches 51 are disposed is obtained. However, it is likely that stress acting on the bending sections 52 is larger than stress in the case of the two crack-like notches 51 and the bending sections 52 are plastically deformed. Therefore, it is likely that a fixing force of the diffusion plate 30 about to close decreases because of reaction of the opening of the crack-like notches 51 and long-term reliability of the contact of the humidifying bodies 20 and the diffusion plate 30 is spoiled.

Concerning the length of the crack-like notches 51 and the opening width of the cutout 50, to keep the intervals in the first direction of the humidifying bodies 20 fixed, when the thickness of the diffusion plate 30 is an upper limit of tolerance and the opening width of the cutout 50 is a lower limit of machining tolerance, it is desirable to set the crack-like notches 51 and the cutout 50 such that the bending sections 52 do not come into contact with the humidifying bodies adjacent to each other. When the thickness of the diffusion plate 30 is a lower limit of tolerance and the opening width of the cutout 50 is an upper limit of machining tolerance, it is desirable to set the crack-like notches 51 and the cutout 50 such that the diffusion plate 30 and the humidifying bodies 20 are surely in contact with each other and the crack-like notches 51 open.

The crack-like notches 51 only has to have a shape opened by the insertion of the diffusion plate 30. An angle of the crack-like notches 51 is desirably equal to or larger than 0° and smaller than 90° generally from the horizontal direction to the vertical direction. When the crack-like notches 51 are provided in the horizontal direction as shown in FIGS. 15 and 16, depending on machining fluctuation in the vertical direction of the diffusion plate 30 and the cutout 50, it is likely that the bottom surface of the diffusion plate 30 and the bottom surface of the cutout 50 are not in contact with each other.

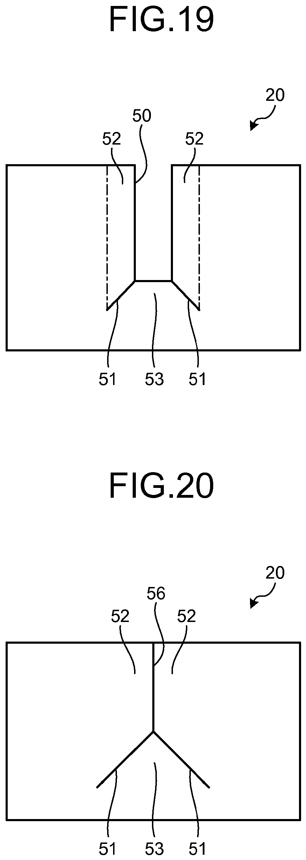

FIG. 19 is a diagram showing an example of the cracks. As shown in FIG. 19, when the crack-like notches 51 are set at an angle between the horizontal and the vertical downward direction, a lower side portion of the cutout 50 sandwiched by the two crack-like notches 51 is also formed as a bendable bending section 53 when the diffusion plate 30 is inserted into the cutout 50. Therefore, compared with when the crack-like notches 51 are formed horizontally, it is possible to increase a contact area of the humidifying bodies 20 and the diffusion plate 30.

When a positioning block for stopping the movement of the diffusion plate 30 in the upward direction and the movement of the humidifying bodies 20 in the downward vertical direction is provided, reaction of the bending section 53 due to the insertion of the diffusion plate 30 into the cutout 50 acts. There is also an advantage that the humidifying bodies 20 and the diffusion plate 30 can be positioned in the vertical direction.

As a start position of the crack-like notches 51 in the cutout 50, it is desirable to form the crack-like notches 51 from the bottom surface (the distal end) of the cutout 50 to increase a contact distance of the humidifying bodies 20 and the diffusion plate 30 and efficiently transfer the water supply. Note that a cutout and cracks can be formed on the diffusion plate side.

As shown in FIGS. 15 and 16, cutouts (third notches) 54 same as the cutout 50 and cracks (fourth notches) 55 same as the crack-like notches 51 are formed on the side surfaces (the left and right surfaces) and the bottom surface of the humidifying body 20 as well. Positioning of the humidifying body 20 can be performed by inserting the positioning protrusions 17 formed in the casing 10 into the cutouts 54. Like the cutout 50 and the crack-like notches 51 formed on the upper surface, the cutouts 54 and the cracks 55 can absorb fluctuation in dimensions and more surely perform positioning.

FIG. 20 is a diagram showing an example of a notch formed in the humidifying body 20. In this example, a notch (a first notch) 56 without width is formed instead of the cutout 50. The crack-like notches 51 are formed from the distal end of the notch 56. Even with such a notch 56, when the diffusion plate 30 is inserted, the bending sections 52 and 53 bend. It is possible to achieve sure contact with the diffusion plate 30. Note that, in FIG. 20, the notch 56 and the crack-like notches 51 are formed in a Y shape. However, the notch 56 and the crack-like notches 51 can be formed in a T shape or can be formed in an L shape.

With the humidifying element 2 and the humidifying apparatus 1 configured as explained, it is possible to achieve uniform supply of water to the plurality of humidifying bodies 20. It is possible to achieve stable water supply to the humidifying bodies 20 for a long period. It is possible to simplify the configuration of the humidifying element 2 and achieve facilitation of assemblability. It is possible to achieve an increase in the humidifying amount by the humidifying element 2. It is possible to achieve improvement of hygiene.

Reference Signs List

1    humidifying apparatus

2          humidifying element
3          water supply pipe
3a        water supply valve
4          water discharge pipe
5          blower
6          control device
7          drain pan
8          water level sensor
10, 10a, 10b    casing
10c        opening section
11        water supply port
12        water storing section
12a        opening
13        water discharge section
13a        water discharge port
14        structure wall
15        engaging section
16        vaporization residue
17        positioning protrusion
18        communication port
20        humidifying body
30        diffusion plate
40        projecting section
50        cutout (first notch)
51        (crack-like) second notch

52, 53    bending section
54        cutout (third notch)
55        crack (fourth notch)
60        seal structure
70        projecting section
80        recessed section
112        water storing section
130        diffusion plate

**Claims**

**1.** A humidifying element (2) comprising:

a plurality of humidifying bodies (20) arranged along a first direction to provide gaps among the humidifying bodies (20) ;
a diffusion plate (30) that extends along the first direction and is in contact with the plurality of humidifying bodies (20); and
a casing (10) that houses the plurality of humidifying bodies (20) and the diffusion plate (30) on an inside, wherein the casing (10) includes a water storing section (12) that is provided above the humidifying bodies (20) and stores water therein, **characterized by**
an opening (12a) is formed in a bottom surface of the water storing section,

the diffusion plate (30) is inserted into the opening (12a),
a first notch (50) that extends up and down and into which the diffusion plate (30) is inserted is formed with a width smaller than a thickness of the diffusion plate (30) on an upper surface of the humidifying body (20), and at least one second notch (51) that extends to at least one side of left and right direction sides viewed along the first direction is formed from a distal end of the first notch (50) in the humidifying body (20).

2. The humidifying element (2) according to claim 1, wherein second notches (51) are formed on both the left and right direction sides of the first notch (50).

3. The humidifying element (2) according to any one of claims 1 or 2, wherein the at least one second notch (51) is or the second notches (51) are formed at an angle equal to or larger than 0° and smaller than 90° from a horizontal direction toward a vertical downward direction.

4. The humidifying element (2) according to any one of claims 1 to 3, wherein the first notch (50) is formed to be deviated to left or right when the humidifying body (20) is viewed along the first direction.

5. The humidifying element (2) according to any one of claims 1 to 4, wherein

positioning projecting sections (40) for positioning the humidifying body (20) are formed in the casing (10),
on at least one surface of left and right surfaces and a bottom surface of the humidifying body (20), third notches (54) extending to left and right on the left and right surfaces are formed or a third notch extending up and down on the bottom surface is formed,
in the humidifying body (20), fourth notches (55) extending from distal ends of the third notches (54) formed on the left and right surfaces to an up-down direction side or extending from a distal end of the third notch (54) formed on the bottom surface to a left-right direction side are formed, and
width of the third notch (es) (54) is smaller than width of the positioning projecting sections (40).

6. A humidifying apparatus (1) comprising:

the humidifying element (2) according to any one of claims 1 to 5; and
a blower that allows air to pass among the humidifying bodies (20) .

**Patentansprüche**

1. Befeuchtungselement (2), umfassend:

eine Vielzahl von Befeuchtungskörpern (20), die entlang einer ersten Richtung angeordnet sind, um Lücken zwischen den Befeuchtungskörpern (20) bereitzustellen;
eine Diffusionsplatte (30), die sich entlang der ersten Richtung erstreckt und in Kontakt mit der Vielzahl von Befeuchtungskörpern (20) steht; und
ein Gehäuse (10), das die Vielzahl von Befeuchtungskörpern (20) und die Diffusionsplatte (30) an einer Innenseite aufnimmt, wobei
das Gehäuse (10) einen Wasserspeicherabschnitt (12) enthält, der über den Befeuchtungskörpern (20) vorgesehen ist und Wasser darin speichert, **gekennzeichnet durch**
eine Öffnung (12a), die in einer Bodenoberfläche des Wasserspeicherabschnitts ausgebildet ist,
wobei die Diffusionsplatte (30) in die Öffnung (12a) eingesetzt ist,
eine erste Kerbe (50), die sich nach oben und unten erstreckt und in die die Diffusionsplatte (30) eingesetzt ist, mit einer Breite, die kleiner ist als die Dicke der Diffusionsplatte (30), auf einer oberen Oberfläche des Befeuchtungskörpers (20) ausgebildet ist, und
zumindest eine zweite Kerbe (51), die sich zu zumindest einer Seite von Links- und Rechts-Richtungsseiten, betrachtet entlang der ersten Richtung, von einem distalen Ende der ersten Kerbe (50) in dem Befeuchtungskörper (20) gebildet ist.

2. Befeuchtungselement (2) nach Anspruch 1, wobei zweite Kerben (51) auf beiden, den Links- und Rechts-Richtungsseiten, der ersten Kerbe (50) ausgebildet sind.

3. Befeuchtungselement (2) nach einem der Ansprüche 1 oder 2, wobei die zumindest eine zweite Kerbe (51) oder die zweiten Kerben (51) in einem Winkel gleich oder größer als 0° und kleiner als 90° von einer horizontalen Richtung zu einer vertikalen Abwärtsrichtung ausgebildet ist/sind.

4. Befeuchtungselement (2) nach einem der Ansprüche 1 bis 3, wobei die erste Kerbe (50) so ausgebildet ist, dass diese nach links oder rechts abweicht, wenn der Befeuchtungskörper (20) entlang der ersten Richtung betrachtet wird.

5. Befeuchtungselement (2) nach einem der Ansprüche 1 bis 4, wobei

Positionier-Vorsprungsabschnitte (40) zum Positionieren des Befeuchtungskörpers (20) in dem Gehäuse (10) ausgebildet sind,
auf zumindest einer Oberfläche von linken und rechten Oberflächen und einer Bodenoberfläche des Befeuchtungskörpers (20) dritte Kerben (54), die sich nach links und rechts auf der linken und rechten Oberfläche erstrecken, oder eine dritte Kerbe, die sich nach oben und unten auf der Bodenoberfläche erstreckt, ausgebildet sind,
in dem Befeuchtungskörper (20) vierte Kerben (55) ausgebildet sind, die sich von distalen Enden der dritten Kerben (54), die auf der linken und rechten Oberfläche ausgebildet sind, zu einer Seite in Aufwärts-Abwärts-Richtung erstrecken oder sich von einem distalen Ende der dritten Kerbe (54), die auf der Bodenoberfläche ausgebildet ist, zu einer Seite in Links-Rechts-Richtung erstrecken, und
eine Breite der dritten Kerbe(n) (54) kleiner ist als eine Breite der Positionier-Vorsprungsabschnitte (40).

6. Befeuchtungsvorrichtung (1), umfassend:

das Befeuchtungselement (2) nach einem der Ansprüche 1 bis 5; und
ein Gebläse, das Luft zwischen den Entfeuchtungskörpern (20) passieren lässt.

## Revendications

1. Élément d'humidification (2) comprenant :

une pluralité de corps d'humidification (20) agencés le long d'une première direction, afin de fournir des intervalles parmi les corps d'humidification (20) ;
une plaque de diffusion (30) qui s'étend le long de la première direction, et qui est en contact avec la pluralité de corps d'humidification (20) ; et
une enveloppe (10) qui loge à l'intérieur la pluralité de corps d'humidification (20) et la plaque de diffusion (30), dans lequel
l'enveloppe (10) comprend une section stockage d'eau (12) qui est disposée au-dessus des corps d'humidification (20), et qui stocke de l'eau à l'intérieur, **caractérisé en ce que**
une ouverture (12a) est formée dans une surface inférieure de la section stockage d'eau,
la plaque de diffusion (30) est insérée dans l'ouverture (12a),
une première encoche (50), qui s'étend vers le haut et vers le bas, et dans laquelle est insérée la plaque de diffusion (30), est formée avec une largeur inférieure à l'épaisseur de la plaque de diffusion (30) sur une surface supérieure du corps d'humidification (20), et
au moins une deuxième encoche (51), qui s'étend vers au moins un côté des côtés dans les directions gauche et droite, quand on regarde le long de la première direction, est formée à partir d'une extrémité distale de la première encoche (50) dans le corps d'humidification (20).

2. Élément d'humidification (2) selon la revendication 1, dans lequel les deuxièmes encoches (51) sont formées des deux côtés dans les directions gauche et droite de la première encoche (50).

3. Élément d'humidification (2) selon la revendication 1 ou 2, dans lequel la ou les deuxième(s) encoche(s) (51) sont formées selon un angle égal ou supérieur à 0°, et inférieur à 90°, à partir d'une direction horizontale vers une direction verticale vers le bas.

4. Élément d'humidification (2) selon l'une quelconque des revendications 1 à 3, dans lequel la première encoche (50) est formée afin de dévier vers la gauche ou vers la droite, quand on regarde le corps d'humidification (20) le long de la première direction.

**5.** Élément d'humidification (2) selon l'une quelconque des revendications 1 à 4, dans lequel

des sections de positionnement en saillie (40), destinées à positionner le corps d'humidification (20), sont formées dans l'enveloppe (10),
sur une surface au moins des surfaces gauche et droite, et sur une surface inférieure du corps d'humidification (20), des troisièmes encoches (54), s'étendant vers la gauche et vers la droite sur les surfaces gauche et droite sont formées, ou une troisième encoche, s'étendant vers le haut et vers le bas sur la surface inférieure, est formée,
dans le corps d'humidification (20), des quatrièmes encoches (55), s'étendant à partir des extrémités distales des troisièmes encoches (54) formées sur les surfaces gauche et droite vers un côté dans la direction haut - bas, ou s'étendant à partir d'une extrémité distale de la troisième encoche (54) formée sur la surface inférieure vers un côté dans la direction gauche - droite, sont formées, et
la largeur de la ou des troisièmes encoche(s) (54), est inférieure à la largeur des sections de positionnement en saillie (40).

**6.** Appareil d'humidification (1) comprenant :

l'élément d'humidification (2) selon l'une quelconque des revendications 1 à 5 ; et
une soufflante qui permet à l'air de passer parmi les corps d'humidification (20).

# FIG.1

- - - - - SIGNAL LINE

# FIG.2

# FIG.3

# FIG.4

# FIG.5

# FIG.6

# FIG.7

# FIG.8

# FIG.9

# FIG.10

# FIG.11

# FIG.12

# FIG.13

# FIG.14

# FIG.15

FLOWING
DIRECTION OF AIR

# FIG.16

FLOWING
DIRECTION OF AIR

# FIG.17

# FIG.18

# FIG.19

# FIG.20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0765788 B
- JP H4113837 U
- JP 2003042488 A
- JP H684230 U
- JP 2004061058 A
- JP H01212843 A